# EUROPEAN PATENT APPLICATION

(11) **EP 3 835 698 A1**
(43) Date of publication of application: **16.06.2021**
(21) Application number: 19215623.0
(22) Date of filing: 12.12.2019
(51) Int. Cl.: F26B 17/28, F26B 25/02, G01B 7/14

(54) **DOUBLE DRUM ARRANGEMENT AND METHOD FOR OPERATING THE SAME**

(71) Applicant: Andritz Gouda B.V., 2740 AJ Waddinxveen (NL)
(72) Inventor: Poldervaart, Jeroen, 2809 SL Gouda (NL); Buter, Frederik, 2727 EZ Zoetermeer (NL); Van Heijningen, Ron, 2291 XT Wateringen (NL)
(74) Representative: Wirnsberger & Lerchbaum Patentanwälte OG

(57) **Abstract**

The invention relates to a double drum arrangement (1) with two drums (2, 3) rotatable mounted about axes of rotation (4, 5), each drum (2, 3) having a drum surface (15, 16). In order to reach a continuously high product quality a measuring element is provided on each drum (2, 3) which is rigidly connected to the drum surface (15, 16), wherein the measuring element is arranged axially outside the surface (15, 16) and connected to the surface (15, 16) in such a way that thermal expansion of the surface (15, 16) in a radial direction (19) leads to an approximately proportional displacement of the measuring element in the radial direction (19), wherein a gap measurement device (9) is provided with which a distance between each of the measuring elements and a stationary position can be determined during rotation of the drums (2, 3), wherein a drive is provided for moving one drum (2, 3) in order to modify the distance between the drums (2, 3), whereby the gap measurement device (9) and the drive are connected via a control unit.

## Description

The invention relates to a double drum arrangement with two drums rotatable mounted about axes of rotation, each drum having a drum surface.

Furthermore, the invention relates to a method for operating a double drum arrangement.

Double drum arrangements are known and commonly used for drying of for example foodstuff etc. Such arrangements comprise two similar drums that are normally mounted rotatable with their axes of rotation on the same height and heated by e.g. steam inside the drum such that the outer walls are warmed. The drums are arranged to each other such that the in the axial direction of the drums a gap is created between both drums. The drums rotate in opposite direction and can rotate towards each other or away from each other when viewed in axial direction.

During operation product is fed into the gap and processed along the heated outer walls of the drums. The product then dries as a film on the outer walls of the drums and is scraped off. As due to the heating of the drums the drums expand, the adjustment of the gap is usually done after a certain start-up time.

For adjustment of the gap, usually one drum is fixed and the other drum is adjusted by either moving the drum or providing to drive the frame in which this drum is mounted such that the whole drum arrangement is moved.

Double drum arrangements are known from e.g. WO 2011/112076 A1 or DE 20 014 223 U1 where the adjustment of the gap is done manually and thus mostly inaccurate. Further, a mechanical stop to keep a minimum gap is applied. Due to this end stop, the gap cannot be less than typically 0.15 mm to 0.20 mm.

An object of the invention is to provide a double drum arrangement named at the outset of which the gap between the drums can be adjusted relatively accurate and with a very small distance.

Furthermore, it is an object to provide a method for operating such an arrangement. According to the invention, the first object is attained in that a measuring element is provided on each drum which is rigidly connected to the drum surface, wherein the measuring element is arranged axially outside the surface and connected to the surface in such a way that thermal expansion of the surface in a radial direction leads to an approximately proportional displacement of the measuring element in the radial direction, wherein a gap measurement device is provided with which a distance between each of the measuring elements and a stationary position can be determined during rotation of the drums, wherein a drive is provided for moving one drum in order to modify the distance between the drums, whereby the gap measurement device and the drive are connected via a control unit.

As part of the invention, it was found that distance measurement between the surfaces is then also possible in operation in a simple indirect way, especially since a position of the measuring elements can be used to determine the position of the surfaces.

The surfaces are usually circular in cross-section. Usually the surfaces are cylinder surfaces. It is preferable if a distance of the measuring element from the axis or rotation is smaller than a distance of the surface from the axis of rotation to which the measuring element is connected.

It is advantageous if the gap measurement device has a capacitive or inductive distance sensor with which a distance between the stationary position and a measuring element can be measured. A visual connection between the device and the measuring element is then not necessary. This ensures that the device also works during operation when a visual connection is blocked, for example by contamination, especially foodstuff.

Preferably, a temperature sensor and a heating and/or cooling device are provided in order to control the temperature of the gap measurement device. A constant high measuring quality can then be achieved regardless of the temperature of the double drum arrangement. Usually the temperature of the device is kept essentially constant in order to avoid or minimize thermal expansion which would lead to a falsification of the measurement result.

In order to be able to adapt the gap measurement device easily to different double drum arrangements and for different machine sizes, it is advantageous if the gap measuring device has a support element detachably connected to sensors. Usually, two sensors are arranged on the support element in order to be able to measure distances between two elements, each connected to a drum surface, and the stationary position at which the gap measurement device is arranged. The support element is usually made of a material with a very low thermal expansion coefficient.

It can also be provided that a temperature of the support element is measured and a thermal expansion of the support element is calculated in order to correct the measurement result accordingly.

The indirect determination of a distance between the surfaces is in principle also possible if the part is arranged at only one position on a circumference of the drum, especially since the drum expands radially essentially uniformly and the drums usually rotate at a speed of about 2 to 30 revolutions per minute. In order to achieve a very accurate measurement of a distance between the surfaces, it is however advantageous if the measuring element extends over an entire circumference of the drum to which the measuring element is connected.

Each measuring element preferentially envelops the rotation axis of the drum to which it is rigidly connected. Usually, each measuring element is approximately rotationally symmetrical to the axis of rotation. For example, the measuring element can be designed as a circular disc-shaped drum cover, which is arranged axially at the end of the drum.

Preferably at least one measuring element is designed as a ring, a drum cover or a disc, wherein the measuring element is preferably coaxial with the drum surface to which the measuring element is rigidly connected. The element can then easily be placed on a lateral boundary surface of the typically cylindrical drum surfaces or formed by these lateral boundary surfaces, in particular drum covers. The lateral surfaces usually seal an inner surface of the usually cylindrical drums from an environment in such a way that wet steam can be passed through the drums at a pressure of about 10 bar to bring the drums to a constant temperature to dry food.

Preferably, the gap measurement device is positioned at a connecting line of the two rotation axes, which are usually parallel. It is advantageous if the elements are arranged on the same axial position of the two drums. Usually, the elements are arranged to the side of the drum surfaces, for example as drum covers.

Expediently a rotary encoder is provided on each drum in order to be able to continuously detect an angular position of each drum during a rotation. A distance between the surfaces can then also be determined exactly for a cross-section of the surface that deviates from a perfect circle, depending on an angular position of the drum. To ensure that the position of the sensors of the gap measurement device is exactly known with respect to the circumference of the drum, an encoder signal is beneficial. Usually, a counter ring, mounted on the drum shaft at the outside of the frame, is used in combination with three proximity switches. For a favorable accuracy of the drum position, the number of pulses is quite large, i.e. the number of "teeth" on the rings of both drums is preferably more than 150 per ring.

It is advantageous if for each drum, data concerning a distance of the surface from a stationary point during rotation of the drum at different angular positions and data concerning a distance of the measuring element from the stationary point at at least one angular position are stored in a data memory in order to be able to determine a distance between the drum surfaces on the basis of the measured distances between the stationary position and the measuring elements. The distance can then be determined during a rotation at different positions distributed over a circumference.

The stationary point relative to which the distances are determined for mapping the surface can be identical to the stationary position relative to which the distance of the measuring element is measured during rotation. However, the stationary point can also deviate from the stationary position. For example, mapping is also possible when distances of the surface are measured at different angular positions to the stationary axis of rotation.

The other object is obtained according to the invention in a method for operating a double drum arrangement according to the invention, wherein one drum is moved with the drive dependent on a distance between each of the measuring elements and a stationary position. Since the distance measurement between the measuring elements and the stationary position can be used to determine the distance between the drum surfaces, the distance between the drums can simply be changed with the drive in order to maintain the desired distance between the drum surfaces even in the event of thermal expansion by means of a control unit.

Preferably the drum surfaces are mapped prior to moving the drum with the drive wherein the distances of the drum surfaces from a stationary point, in particular the axis of rotation, are measured at several positions distributed over a circumference of the drum surface. As explained above, the stationary point can also coincide with the stationary position relative to which the distance of the measuring element is determined during rotation to determine a distance between the drum surfaces during operation.

It is advantageous that the distances of the measuring element from the assigned drum surface is measured prior to moving the drum with the drive.

Usually, the distance of the measuring element from the drum surface is measured at several positions distributed over a circumference of the drum surface. Usually, this is done prior to moving the drum with the drive for each measuring element. If the measuring element extends over the entire circumference, then the distance of the drum surfaces can be determined by a distance of the measuring element from the stationary position.

If the measuring element extends over the entire circumference, for example if the measuring element is designed as a drum cover, then the distance of the drum surfaces from the stationary position as well as from each other in radial direction can be determined easily from a distance of the measuring element from the stationary position. If the distances of both elements from the stationary position are determined simultaneously, the distance between the drum surfaces can be determined easily during operation.

The stationary position is usually the point where the gap measurement device is located, preferably centrally between the drums and at the side of the surfaces.

It is advantageous that the angular position of each drum is continuously detected during rotation. The measurement result of the angular position can be used to determine the distance between the drum surfaces.

It is preferred that one drum is moved depending on a distance between the drum surfaces of the drums, wherein a distance of the drum surfaces is determined mathematically from the measured distances of the measuring elements from the stationary position and the previously determined distances between the measuring elements and the drum surfaces.

Usually, the drums are heated in order to dry stuff. A favorable improvement of the method is characterized in that the rotation of the drums is temporarily stopped after preheating and the gap between the drums is closed to zero for calibration. Usually, this is done prior to moving the drum with the drive during operation.

Additional features, benefits and effects of the invention follow from the exemplary embodiment described below.

The drawings which are thereby referenced show the following:
Fig. 1 A schematic perspective view of a double drum arrangement;
Fig. 2a A top view of the drum end;
Fig. 2b A front view in axial direction;
Fig. 3a A 3D view of the gap measurement unit according to the invention;
Fig. 3b A 3D view of the gap measurement unit according to the invention from another direction;
Fig. 4 Curves of distances over a rotation angle.

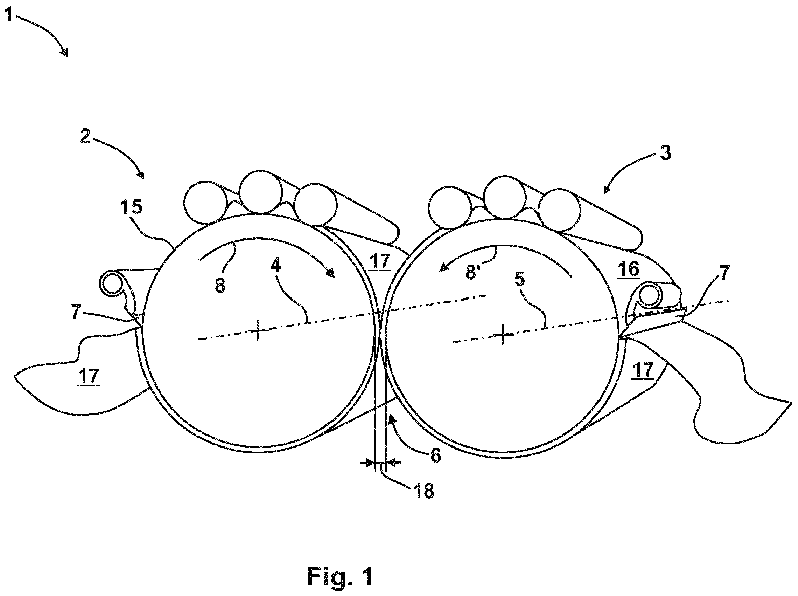

Fig. 1 shows schematically a double drum arrangement 1. It comprises a first drum 2 with a first drum surface 15, rotatably mounted and a second drum 3 with a second drum surface 16, rotatably mounted. The first drum 2 and the second drum 3 are mounted on approximately the same height, so that the axes of rotation 4, 5 of drums 2, 3 are at the same height. Further, the axes of rotation 4, 5 are parallel. The drum surfaces 15, 16 are essentially cylindrical and in cross-section circular. Between the drum surfaces 15, 16 a gap 6 is created which is relatively small compared to the dimensions of the drums. While the drums may have a diameter of 0.5 m to 2 m, the gap is usually between approximately 0.1 mm and 0.5 mm. The drums 2, 3 can rotate towards each other downwardly, but can also rotate away from each other upwardly. The direction of rotation of drum 2 is shown with arrow 8 and the direction of rotation of drum 3 with arrow 8'. Product 17 to be dried, e.g. food, is fed from above and conveyed through the gap 6. The drums 2, 3 are heated from the inside with wet steam or saturated steam, which can, for example, be under a pressure of 12 bar. The product 17 is deposited as a film on the hot drum surfaces 15, 16, which dries the product 17 during rotation of the drums 2, 3. The dried product 17 is scraped off from the drums 2, 3 by doctor blades 7.

Adjusting the gap 6 between the drum surfaces 15, 16 is relatively critical. The gap width 18 is important for the quality of the processed product 17. Thus, it is important that the gap 6 between the drum surfaces 15, 16 can be adjusted relatively accurate.

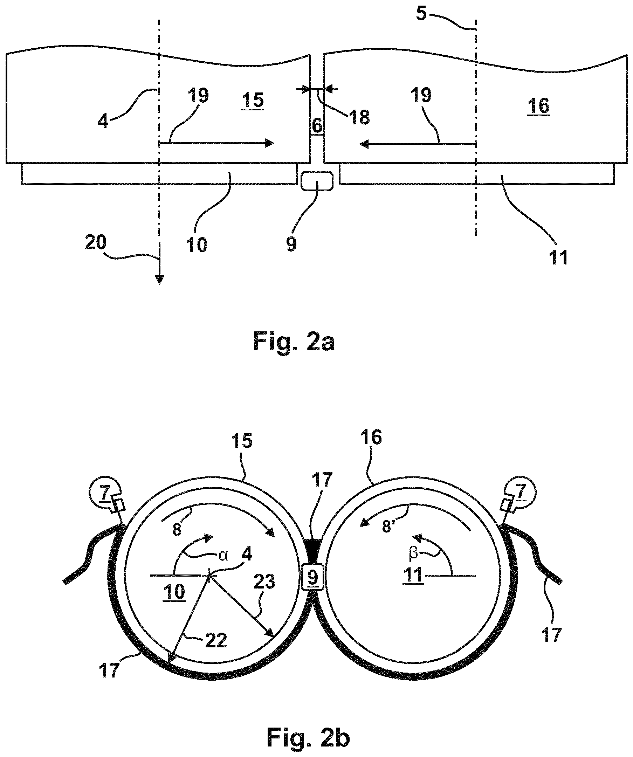

In Fig. 2a a top view of the end of the drums 2, 3 is shown. Here it can be seen that a gap measurement device 9 is provided with is situated between the drum cover 10 of drum 2 and drum cover 11 of drum 3 in front of the gap 6 at a stationary position. The drum covers 10, 11, which are usually made of a cast material, steel or stainless steel, form measuring elements that are rigidly connected to the drum surfaces 15, 16 and extend over an entire circumference of the drums 2, 3. The drum covers 10, 11 are arranged outside the surfaces 15, 16 in an axial direction 20 and connected to the surfaces 15, 16 in such a way that thermal expansion of the surfaces 15, 16 in a radial direction 19 leads to an approximately proportional radial displacement of drum covers 10, 11 in the assigned radial direction 19. Thus, by measuring a distance between the drum covers 10, 11 and the gap measurement device 9, which is located at a stationary position between the rotation axes 4, 5 a distance between the drum surfaces 15, 16 can be determined during operation in a very accurate manner even if the temperature changes. For this purpose, the gap measurement device 9 has two sensors 13 attached to a support element 21.

This automatic semi-direct gap measurement measures the distance between the drum covers 10, 11 and the gap measurement device 9 and determines the gap width 18 of the real gap 6 between the main drums 2, 3. Further, the gap width 18 is controlled via a feedback loop to an automatic setting device with a drive. The gap measurement device 9 is located on the horizontal centerline of the drums 2, 3 and vertically centered between the drums 2, 3. At this position it is extremely close to the hot drum surfaces 15, 16. Furthermore, hot product 17 and vapor from the evaporated water out of the product 17 can and will touch the sensors 13. Thus, the support element of the measuring device 9 is made of a material with a very low thermal expansion coefficient. The front view of Fig. 2b is similar to Fig. 1. Between the two drums 2, 3 there is situated the gap measurement device 9. The direction of rotation of drums 2, 3 is again shown with arrows 8, 8' and the doctor blades 7 are also shown. Rotation angle α of first drum 2 and rotation angle β of second drum 3, which are measured with encoders on the drums, are also shown here. Further, drum surface distance 22 between first drum and rotation axis 4 and cover distance between cover 10 and rotation axis 4 are shown in Fig. 2b.

The sensors 13 of the gap measurement device 9 are designed as inductive sensors in order to be able to detect a distance between the gap measurement device 9 and the drum covers 10, 11 even in case of contamination in the space between the sensors 13 and the covers 10, 11. In principle, other sensors 13 that do not require an optical connection, such as capacitive sensors or ultrasonic sensors, can also be used.

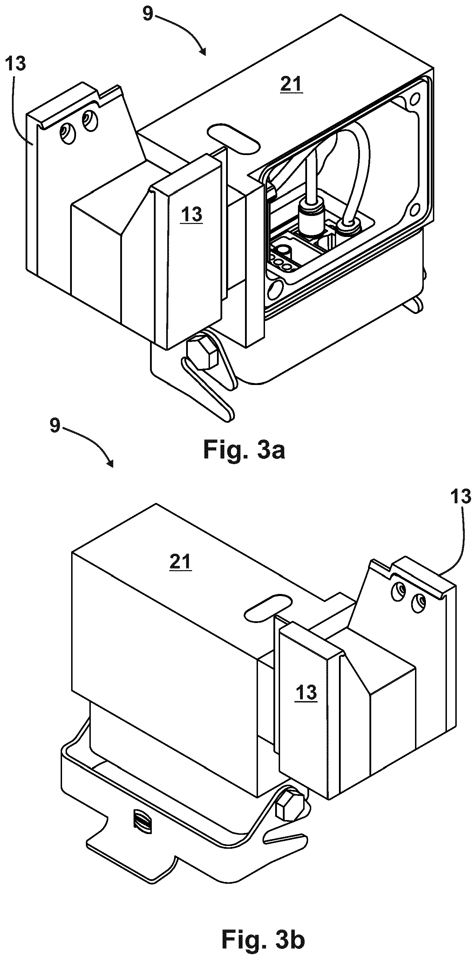

Fig. 3a and 3b show 3D views of the gap measurement device 9. This gap measurement device 9 comprises a support element 21 on which the sensors 13 are arranged. The support element 21 can be exchanged to allow for future drum grinding, which leads to a reduction of the distance between the drum covers 10, 11, or different drum dimensions. This enables retrofitting the gap measurement device 9 on current installed dryers. The sensors 13 are induction displacement sensors (eddy current), which measure only magnetic materials, such as the metal of the drum covers 10, 11. The sensors 13 can be used up to an operation temperature of 150 °C. The drum surfaces 15, 16 can be warmer, but there is no direct contact between the sensors 13 and the drums 2, 3 or drum covers 10, 11. The signal of eddy current sensors 13 is sensitive to temperature. So the temperature of the sensors 13 should be the same under all circumstances in order to have sufficient accuracy of ± 0.03 mm. Therefore, the measuring device 9 is equipped with e.g. electrical heating and compressed air cooling. A software keeps the gap measurement device 9 at the same temperature approx. 100 °C ± 1 °C during all phases of operation.

Further, to have an accurate measurement when the machine is setup for operation, the gap measurement device 9 will be calibrated once the machine is preheated, which takes approx. 2 hours. Then the rotation of the main drums 2, 3 is stopped temporarily and the gap 6 between the drums 2, 3 is closed to zero, which means a gentle touch of the drum surfaces. This will give an absolute reading of the zero gap. Then the gap 6 is opened to the required setting and the drum rotation is restarted according to arrows 8, 8'. This whole operation of calibration will take less than 5 minutes, which is the maximum for a standstill of a hot drum 2, 3.

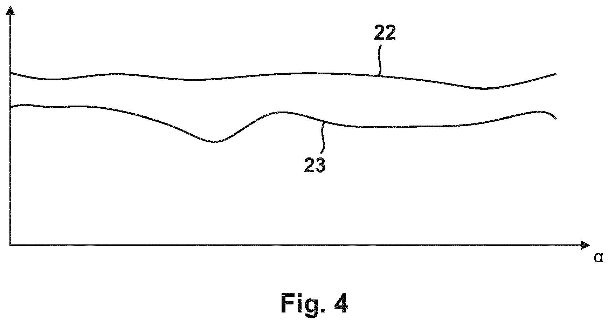

Prior to operating the double drum dryer 1, the drum surfaces 15, 16 as well as the drum covers 10, 11 are mapped. For this purpose, a drum surface distance 22 of each drum surface 15, 16 and a cover distance 23 of each cover 10, 11 from the assigned axis of rotation 4, 5 are measured over the circumference at several positions. Instead of the axis of rotation 4, 5, a distance of the drum surfaces 15, 16 to another stationary point during a rotation could be measured at different angular positions of the drum in order to obtain a mapping of the drum surfaces 15, 16. A rotary encoder is provided on the drums 2, 3 for this purpose. The mapping is done by relating the sensor signals from the gap measurement device 9 to a signal from an electronic gauge, such as used to measure the run-out of the drums 2, 3. Fig. 4 shows a drum surface distance 22 of the surface 15 to the axis of rotation 4 obtained in this way as well as a cover distance 23 of the drum cover 10 to the axis of rotation 4 over a rotation angle α of the first drum 2.

Corresponding data are also available for the second drum surface 16 and the second cover 11. This correlation between the drum covers 10, 11 and the drum surfaces 15, 16 over the rotation angles α, β of the drums 2, 3 are stored in a data memory which is connected to the gap measurement device 9 and a control unit. This makes it possible to determine the gap width 18 between the drum surfaces 15, 16 on the basis of a measured distance between the drum covers 10, 11 and the gap measurement device 9 as well as a measured rotation angle α, β of the drums 2, 3. Based on the determined distance, a drum 2, 3 can be moved with a drive that is not shown, in order to maintain a desired gap width 18 even under thermal expansion of the drums 2, 3.

## Claims

1. Double drum arrangement (1) with two drums (2, 3) rotatable mounted about axes of rotation (4, 5), each drum (2, 3) having a drum surface (15, 16), **characterized in that** a measuring element is provided on each drum (2, 3) which is rigidly connected to the drum surface (15, 16), wherein the measuring element is arranged axially outside the surface (15, 16) and connected to the surface (15, 16) in such a way that thermal expansion of the surface (15, 16) in a radial direction (19) leads to an approximately proportional displacement of the measuring element in the radial direction (19), wherein a gap measurement device (9) is provided with which a distance between each of the measuring elements and a stationary position can be determined during rotation of the drums (2, 3), wherein a drive is provided for moving one drum (2, 3) in order to modify the distance between the drums (2, 3), whereby the gap measurement device (9) and the drive are connected via a control unit.

2. Double drum arrangement (1) according to claim 1, wherein the gap measurement device (9) has a capacitive or inductive distance sensor (13) with which a distance between the stationary position and a measuring element can be measured.

3. Double drum arrangement (1) according to claim 1 or 2, wherein a temperature sensor and a heating and/or cooling device are provided in order to control the temperature of the gap measurement device.

4. Double drum arrangement (1) according to any one of claims 1 to 3, wherein the gap measuring device (9) has a support element (21) detachably connected to sensors (13).

5. Double drum arrangement (1) according to any one of claims 1 to 4, wherein the measuring element extends over an entire circumference of the assigned drum (2, 3).

6. Double drum arrangement (1) according to any one of claims 1 to 5, wherein at least one measuring element is designed as a ring, a drum cover (10, 11) or a disc, wherein the measuring element is preferably coaxial with the drum surface (15, 16) to which the measuring element is rigidly connected.

7. Double drum arrangement (1) according to any one of claims 1 to 6, wherein the gap measurement device (9) is positioned essentially at a connecting line of the two rotation axes (4, 5), which are usually parallel.

8. Double drum arrangement (1) according to any one of claims 1 to 7, wherein a rotary encoder is provided on each drum (2, 3) in order to be able to continuously detect an angular position of each drum (2, 3) during a rotation.

9. Double drum arrangement (1) according to any one of claims 1 to 8, wherein for each drum (2, 3), data concerning a distance of the surface from a stationary point during rotation of the drum at different angular positions and data concerning a distance of the measuring element from the stationary point at at least one angular position are stored in a data memory in order to be able to determine a distance between the drum surfaces (15, 16) on the basis of the measured distances between the stationary position and the measuring elements.

10. Method for operating a double drum arrangement (1) according to any one of claims 1 to 9, wherein one drum (2, 3) is moved with the drive dependent on a distance between each of the measuring elements and a stationary position.

11. Method according to claim 10, wherein the drum surfaces (15, 16) are mapped prior to moving the drum with the drive wherein the distance of the drum surfaces (15, 16) from a stationary point, in particular the axis of rotation (4, 5), are measured at several positions distributed over a circumference of the drum surface.

12. Method according to claim 11, wherein the distances of the measuring elements from the assigned drum surfaces (15, 16) are measured prior to moving the drum (2, 3) with the drive.

13. Method according to claim 12, wherein a distance between the measuring element and the drum surface (15, 16) is measured at several positions distributed over a circumference of the drum surface for each measuring element.

14. Method according to any one of claims 10 to 13, wherein the angular position of each drum (2, 3) is continuously detected during rotation.

15. Method according to any one of claims 10 to 14, wherein one drum (2, 3) is moved depending on a distance between the drum surfaces (15, 16) of the drums (2, 3), wherein a distance of the surfaces (15, 16) is determined mathematically from the measured distances of the measuring elements from the stationary position and the previously determined distances between the measuring elements and the drum surfaces (15, 16).
